# EUROPEAN PATENT SPECIFICATION

(11) **EP 3 758 903 B1**
(45) Date of publication and mention of the grant of the patent: **06.04.2022**
(21) Application number: 19708486.6
(22) Date of filing: 28.02.2019
(51) Int. Cl.: B29C 33/56, B29C 33/40, B29K 75/00, B29K 105/04

(54) **MOLD FOR MANUFACTURING A BODY MADE OF A POROUS MATERIAL**
FORM ZUR HERSTELLUNG EINES KÖRPERS AUS EINEM PORÖSEN MATERIAL
MOULE PERMETTANT DE FABRIQUER UN CORPS CONSTITUÉ D'UN MATÉRIAU POREUX

(30) Priority: 01.03.2018 EP 18159508
(43) Date of publication of application: 06.01.2021
(73) Proprietor: BASF SE, 67056 Ludwigshafen am Rhein (DE)
(72) Inventor: FRICKE, Marc, 49448 Lemfoerde (DE); VOGELSANG, Volker, 49448 Lemfoerde (DE); WEINRICH, Dirk, 49448 Lemfoerde (DE); LOELSBERG, Wibke, 67056 Ludwigshafen (DE); NOBIS, Marcel, 49448 Lemfoerde (DE); VIERECK, Ruediger, 49448 Lemfoerde (DE); INDERRIEDEN, Thorsten, 49448 Lemfoerde (DE); KAMINSKY, Torben, 49448 Lemfoerde (DE); THOMAS, Maria, 49448 Lemfoerde (DE)
(74) Representative: BASF IP Association
(86) International application number: PCT/EP2019/054999
(87) International publication number: WO 2019/166555

(56) References cited:
- JP-A- S58 166 021
- US-A- 3 127 457
- US-A- 3 248 758
- US-A- 3 537 677
- US-A1- 2002 130 441
- US-A1- 2014 335 634

## Description

### Technical field

The present invention relates to a mold for manufacturing a body made of a porous material derived from precursors of the porous material in a sol-gel process carried out within the mold.

### Background

Porous materials, for example polymer foams, having pores in the size range of a few microns or significantly below and a high porosity of at least 70 % are particularly good thermal insulators on the basis of theoretical considerations.

Such porous materials having a small average pore diameter can be, for example, in the form of organic aerogels or xerogels which are produced with a sol-gel process and subsequent drying. In the sol-gel process, a sol based on a reactive organic gel precursor is first produced and the sol is then gelled by means of a crosslinking reaction to form a gel. To obtain a porous material, for example an aerogel, from the gel, the liquid has to be removed. This step will hereinafter be referred to as drying in the interests of simplicity.

Particularly, during the process for preparing a porous material, a mixture is provided that comprises the reactive precursors and a solvent. In order to define the shape of the porous material, a mold into which this mixture is filled may be basically used. After gelling and drying, the thus formed body made of a porous material has to be removed from the mold. US 2002/130441 A1 discloses a mold for manufacturing porous materials having an internal coating.

### Summary

A particular problem associated with the use of molds is that common materials for molds known from other production processes such as injection molding may not be used with sol-gel processes. For example, metal or polyethyleneterephthalate provide the disadvantage in that they stick to the gel formed from the precursors during the sol-gel reaction, such as polyurethane or polyurea based precursors. With other words, the gel sticks to the mold during its formation from the sol. Thus, the body made of a porous material may not be completely removed from the mold. Common release agents disposed between the mold and the precursors of the porous material or sol are not resistant to the solvent which might have negative effects on the sol-gel reaction as they dissolve into the precursors or sol and/or negatively impact the gelling reaction. If they dissolve, they can cease to function, i.e. no longer work, and/or they can affect the sol-gel reaction as described leading to decreased product performance. Further, solvents commonly used in such sol-gel processes are flammable such as acetone, ethanol, methylethylketone, ethyl acetate. Thus, the handling of such materials commonly involves process steps exhibiting explosion hazard due to the resulting flammable solvent vapors which requires that the materials used for the mold must prevent explosion hazards and comply with explosion-protection requirements.

It was therefore an object of the invention to avoid the abovementioned disadvantages. In particular, a mold should be provided that may be used with any gel-forming precursors for a porous material in a sol-gel process, particularly with polyurethane- or polyurea-based precursors, even in explosion-protected environments.

According to the present invention, this object is solved by a mold according to claim 1.

Further, if the mold is used in combination with an optional closure or lid, the quality of the gel and the resulting body may be maintained throughout the complete manufacturing process of the body as evaporation of the solvent and collapsing of pores are prevented.

According to the mold of the present invention, it was surprisingly found, that due to a provision of a coating made of a material being electrically dissipative and non-sticky to the gel resulting from precursors of the porous material and/or the body on surfaces facing the interior volume of the lower part of the mold, it is possible to use the mold with any gel-forming precursors for a porous material in a sol-gel process, particularly with polyurethane- or polyurea-based precursors, even in explosion protection environments. Further, no release agents are required for carrying out the sol-gel process within the mold. Still further, the mold is reusable. Furthermore, the mold may basically define any shape for the body.

The porous materials of the present invention are preferably aerogels or xerogels.

The coating preferably comprises at least one halogen-containing polymer and at least one inorganic filler. More preferably, the halogen-containing polymer is a fluorinated polymer such as for example polytetrafluoroethylene, a perfluoro alkoxy polymer or a fluorinated ethylene propylene polymer.

The coating preferably comprises at least one inorganic filler and at least one polymer selected from the group consisting of polytetrafluoroethylene, perfluoro alkoxy polymers and fluorinated ethylene propylene polymers. Particularly preferred are fluorinated ethylene propylene polymers such as perfluoro ethylene propylene.

Thus, the mold may be provided with coatings made of different materials which allows to design the mold as appropriate to the respective manufacturing process of the porous material.

Preferred embodiments may be found in the claims and the description. Combinations of preferred embodiments do not go outside the scope of the present invention. Preferred embodiments of the components used are described below.

According to the present invention, the lower part defines an interior volume which in turn defines the shape of the porous material to be manufactured. The shape of the porous material may be any shape. Thus, the shape may be arbitrarily defined which allows to manufacture porous material with a broad range of possible shapes. Preferably, the shape is cuboid. As surfaces of the lower part facing the interior volume are at least partially provided with a coating made of a material being electrically dissipative and non-sticky to the gel formed from the precursors of the porous material and/or the body, areas of the lower part intended to contact the gel are prevented from sticking to the gel, the thus formed porous material, body and/or any intermediate product thereof. Thus, the body made of a porous material may be reliably and completely removed from the mold through the first opening. Further, as the coating is made of an electrically dissipative material, an explosion due to electrostatic charge of the mold, sol and/or gel as a possible ignition source is prevented and the mold is allowed to be used in explosion-protected environments.

According to a further development of the present invention, the lower part comprises the first opening. Thus, the body made of a porous material may be easily removed from the lower part. For example, the first opening may be defined by an upper rim of the lower part.

According to a further development of the present invention, the lower part is made of metal or polymer. Thus, the lower part may be made of an electrically dissipative material which improves the explosion-protection characteristics of the mold.

According to a further development of the present invention, the material of the coating comprises an electrical resistivity of not more than 10⁸ Qm. Thus, the material comprises suitable electrically dissipative characteristics as it comprises a rather high electrical conductivity. It is to be noted that the electrical resistivity and electrical conductivity, respectively, are defined at a temperature of 20°C unless otherwise stated.

According to a further development of the present invention, the interior volume defines a cuboid shape for the body. Thus, the porous material may be manufactured with a shape commonly used for insulation plates or slabs.

According to a further development of the present invention, the shape has a length in a range of 10 cm to 100 cm and a width in a range of 10 cm to 100 cm. Thus, the mold may be used for manufacturing insulation plates or slabs with common dimensions.

According to a further development of the present invention, the height of the shape is variable. The variation of the height may be provided by a variation of the filling level of the precursors within the lower part. Thus, the same mold may be used to manufacture porous materials with different heights.

According to a further development of the present invention, the mold further comprises a cover part configured to close the first opening, a second opening, and a lid configured to close the second opening. Thus, a completely closeable mold is provided which prevents any hazardous solvent vapor from leaking, releasing or discharging. As the mold may be closed, premature solvent loss and a decrease of the product quality is prevented. Particularly, in case of volatile solvents, upon premature solvent evaporation, the pores collapse and gel damage will occur. Further, as the mold may be closed, a protection of the surrounding area is provided. Further, if the mold is used in combination with such an optional closure or lid, the quality of the gel and the resulting body may be maintained throughout the complete manufacturing process of the body as evaporation of the solvent and collapsing of pores are prevented.

Particularly, the cover part may be used to close the first opening of the lower part, the precursors may be filled into the lower part through the second opening which in turn may be closed by the lid. After the formation of the porous material, the cover part may be removed and the body made of a porous material may be removed from the lower part through the first opening.

According to a further development of the present invention, the lower part or the cover part comprises the second opening. Thus, the precursors may be easily filled into the lower part through the second opening.

According to a further development of the present invention, the first opening comprises a first opening area and the second opening comprises a second opening area, wherein the second opening area smaller than the first opening area. Thus, an excessive leakage or release of any solvent vapor during filling of the precursors into the lower part is prevented.

According to a further development of the present invention, the mold further comprising at least a first sealing configured to be arranged between the lower part and the cover part, wherein the first sealing is configured to provide a gas-tight closing of the first opening by means of the cover part. Thus, the mold may be closed in a hermetically or gas-tight manner.

According to a further development of the present invention, the lower part comprises a bottom and side walls extending from the bottom, wherein an upper rim of the side walls opposite to the bottom defines the first opening. Thus, the overall design of the mold may be simplified such as similar to pot and lid.

According to a further development of the present invention, the surfaces of the lower part comprises the coating at areas intended for coming into contact with the precursors of the porous material. Thus, the amount of the coating material may be reduced which decreases the costs for manufacturing the mold.

According to a further development of the present invention, the material of the coating is non-corroding. Thus, the coating material is robust.

According to a further development of the present invention, the material of the coating comprises a shore hardness in a range of D60 to D80. Thus, the coating material is not sensitive to scratches or the like which increases the robustness of the mold.

According to a further development of the present invention, the coating comprises a thickness in a range of 20 µm to 70 µm. Thus, a rather thin coating is sufficient to provide the above described advantages.

According to a further development of the present invention, the coating is a reusable coating. Thus, the mold may be used several times which decreases the manufacturing costs for the porous material.

According to a further development of the present invention, the coating is reusable for at least 50 and preferably at least 100 cycles of the sol gel process. Thus, the mold may be used in an economic manner.

Organic and inorganic aerogels and xerogels as well as processes for their preparation are known from the state of the art. In the sol-gel process, a sol based on a reactive gel precursor or precursors is first produced and the sol is then gelled by means of a crosslinking reaction to form a gel. To obtain a porous material, for example an aerogel, from the gel, the liquid has to be removed. This step will hereinafter be referred to as drying in the interests of simplicity.

It is generally known that gel monoliths or particles based on organic (e.g. PU) or inorganic (e.g. silica) precursors can be dried, preferably via supercritical extraction (i.e. using a medium in the supercritical state, e.g. CO2) to obtain organic, inorganic or hybrid aerogels.

The chemical nature of the gel can vary. It is possible that an organic gel is provided but also inorganic gels can be subjected to the process according to the present invention. Suitable methods to prepare organic or inorganic gels are known to the person skilled in the art. Preferably, the gel is an organic gel according to the present invention.

In principle, the process does not depend on the gel chemistry. Thus, according to the present invention, any organic or inorganic gel can be used in the process, for example organic gels, such as gels based on synthetic polymers or biopolymers, or inorganic gels.

Therefore, according to a further embodiment, the present invention is also directed to the process as disclosed above, wherein the gel is an organic gel.

Organic xerogels and aerogels preferred for the purposes of the present invention are described below.

It is preferable that the organic aerogel or xerogel is based on isocyanates and optionally on other components that are reactive toward isocyanates. By way of example, the organic aerogels or xerogels can be based on isocyanates and on OH-functional and/or NH-functional compounds.

Preference is given in the invention by way of example to organic xerogels based on polyurethane, polyisocyanurate, or polyurea, or organic aerogels based on polyurethane, polyisocyanurate, or polyurea.

Accordingly, one preferred embodiment of the present invention provides a composite element comprising a profile and an insulating core enclosed at least to some extent by the profile, as described above, where the organic porous material is one selected from the group of organic xerogels based on polyurethane, polyisocyanurate, or polyurea, organic aerogels based on polyurethane, polyisocyanurate, or polyurea, and combinations of two or more thereof.

It is particularly preferable that the organic aerogel or xerogel is based on isocyanates and on components reactive toward isocyanates, where at least one polyfunctional aromatic amine is used as component reactive toward isocyanates. It is preferable that the organic xerogel or aerogel is based on polyurea and/or polyisocyanurate.

"Based on polyurea" means that at least 50 mol%, preferably at least 70 mol%, in particular at least 90 mol%, of the linkages of the monomer units in the organic xerogel or aerogel take the form of urethane linkages. "Based on polyurea" means that at least 50 mol%, preferably at least 70 mol%, in particular at least 90 mol%, of the linkages of the monomer units in the organic xerogel or aerogel take the form of urea linkages. "Based on polyisocyanurate" means that at least 50 mol%, preferably at least 70 mol%, in particular at least 90 mol%, of the linkages of the monomer units in the organic xerogel or aerogel take the form of isocyanurate linkages. "Based on polyurea and/or polyisocyanurate" means that at least 50 mol%, preferably at least 70 mol%, in particular at least 90 mol%, of the linkages of the monomer units in the organic aerogel take the form of urea linkages and/or isocyanurate linkages.

The composite elements of the invention here can also comprise combinations of various aerogels and xerogels. It is also possible for the purposes of the present invention that the composite element comprises a plurality of insulating cores. It is also possible for the purposes of the invention that the composite element comprises, alongside the organic porous material, another insulation material, for example a polyurethane.

The term organic porous material is used below to refer to the organic aerogel or xerogel used in the invention.

It is preferable that the organic porous material used is obtained in a process which comprises the following steps:
(a) reaction of at least one polyfunctional isocyanate (a1) and of at least one polyfunctional aromatic amine (a2) in a solvent optionally in the presence of water as component (a3) and optionally in the presence of at least one catalyst (a4);
(b) removal of the solvent to give the aerogel or xerogel.

Components (a1) to (a4) preferably used for the purposes of step (a), and the quantitative proportions, are explained below.

The term component (a1) is used below for all of the polyfunctional isocyanates (a1). Correspondingly, the term component (a2) is used below for all of the polyfunctional aromatic amines (a2). It is obvious to a person skilled in the art that the monomer components mentioned are present in reacted form in the organic porous material.

For the purposes of the present invention, the functionality of a compound means the number of reactive groups per molecule. In the case of monomer component (a1), the functionality is the number of isocyanate groups per molecule. In the case of the amino groups of monomer component (a2), the functionality is the number of reactive amino groups per molecule. A polyfunctional compound here has a functionality of at least 2.

If mixtures of compounds with different functionality are used as component (a1) or (a2), the functionality of the component is in each case obtained from the number average of the functionality of the individual compounds. A polyfunctional compound comprises at least two of the abovementioned functional groups per molecule.

### Component (a1)

It is preferable to use, as component (a1), at least one polyfunctional isocyanate.

For the purposes of the process of the invention, the amount used of component (a1) is preferably at least 20% by weight, in particular at least 30% by weight, particularly preferably at least 40% by weight, very particularly preferably at least 55% by weight, in particular at least 68% by weight, based in each case on the total weight of components (a1), (a2), and, where relevant, (a3), which is 100% by weight. For the purposes of the process of the invention, the amount used of component (a1) is moreover preferably at most 99.8% by weight, in particular at most 99.3% by weight, particularly preferably at most 97.5% by weight, based in each case on the total weight of components (a1), (a2), and, where relevant, (a3), which is 100% by weight.

Polyfunctional isocyanates that can be used are aromatic, aliphatic, cycloaliphatic, and/or araliphatic isocyanates. Polyfunctional isocyanates of this type are known per se or can be produced by methods known per se. The polyfunctional isocyanates can in particular also be used in the form of mixtures, and in this case component (a1) then comprises various polyfunctional isocyanates. Polyfunctional isocyanates that can be used as monomer units (a1) have two or more than two isocyanate groups per molecule of the monomer component (where the term diisocyanates is used below for the former).

Particularly suitable compounds are diphenylmethane 2,2'-, 2,4'-, and/or 4,4'-diisocyanate (MDI), naphthylene 1,5-diisocyanate (NDI), tolylene 2,4- and/or 2,6-diisocyanate (TDI), 3,3'-dimethyldiphenyl diisocyanate, 1,2-diphenylethane diisocyanate, and/or p-phenylene diisocyanate (PPDI), tri-, tetra-, penta-, hexa-, hepta-, and/or octamethylene diisocyanate, 2-methylpentamethylene 1,5-diisocyanate, 2-ethylbutylene 1,4-diisocyanate, pentamethylene 1,5-diisocyanate, butylene 1,4-diisocyanate, 1-isocyanato-3,3,5-trimethyl-5-isocyanatomethyl-cyclohexane (isophorone diisocyanate, IPDI), 1,4- and/or 1,3-bis(isocyanatomethyl)cyclohexane (HXDI), cyclohexane 1,4-diisocyanate, 1-methylcyclohexane 2,4- and/or 2,6-diisocyanate, and dicyclohexylmethane 4,4'-, 2,4'-, and/or 2,2'-diisocyanate.

Aromatic isocyanates are preferred as polyfunctional isocyanates (a1). This applies in particular when water is used as component (a3).

The following are particularly preferred embodiments of polyfunctional isocyanates of component (a1):
i) polyfunctional isocyanates based on tolylene diisocyanate (TDI), in particular 2,4-TDI or 2,6-TDI or a mixture of 2,4- and 2,6-TDI;
ii) polyfunctional isocyanates based on diphenylmethane diisocyanate (MDI), in particular 2,2'-MDI or 2,4'-MDI or 4,4'-MDI or oligomeric MDI, which is also termed polyphenyl polymethylene isocyanate, or a mixture of two or three of the abovementioned diphenylmethane diisocyanates, or crude MDI, which arises during the production of MDI, or a mixture of at least one oligomer of MDI and of at least one of the abovementioned low-molecular-weight MDI derivatives;
iii) a mixture of at least one aromatic isocyanate of embodiment i) and of at least one aromatic isocyanate of embodiment ii).

Oligomeric diphenylmethane diisocyanate is particularly preferred as polyfunctional isocyanate. Oligomeric diphenylmethane diisocyanate (termed oligomeric MDI below) involves a mixture of a plurality of oligomeric condensates and therefore of derivatives of diphenylmethane diisocyanate (MDI). The polyfunctional isocyanates can preferably also be composed of mixtures of monomeric aromatic diisocyanates and of oligomeric MDI.

Oligomeric MDI comprises one or more polynuclear condensates of MDI with a functionality of more than 2, in particular 3 or 4 or 5. Oligomeric MDI is known and is often termed polyphenyl polymethylene isocyanate or else polymeric MDI. Oligomeric MDI is usually composed of a mixture of MDI-based isocyanates with different functionality. Oligomeric MDI is usually used in a mixture with monomeric MDI.

The (average) functionality of an isocyanate which comprises oligomeric MDI can vary in the range from about 2.2 to about 5, in particular from 2.4 to 3.5, in particular from 2.5 to 3. This type of mixture of MDI-based polyfunctional isocyanates with different functionalities is in particular crude MDI, which is produced during the production of MDI, usually with catalysis by hydrochloric acid, in the form of intermediate product of crude MDI production.

Polyfunctional isocyanates and mixtures of a plurality of polyfunctional isocyanates based on MDI are known and are marketed by way of example by BASF Polyurethanes GmbH with trademark Lupranat^{®}.

It is preferable that the functionality of component (a1) is at least two, in particular at least 2.2, and particularly preferably at least 2.4. The functionality of component (a1) is preferably from 2.2 to 4 and particularly preferably from 2.4 to 3.

The content of isocyanate groups of component (a1) is preferably from 5 to 10 mmol/g, in particular from 6 to 9 mmol/g, particularly preferably from 7 to 8.5 mmol/g. The person skilled in the art is aware that the content of isocyanate groups in mmol/g and the property known as equivalence weight in g/equivalent have a reciprocal relationship. The content of isocyanate groups in mmol/g is obtained from the content in % by weight in accordance with ASTM D5155-96 A.

In one preferred embodiment, component (a1) is composed of at least one polyfunctional isocyanate selected from diphenylmethane 4,4'-diisocyanate, diphenylmethane 2,4'-diisocyanate, diphenylmethane 2,2'-diisocyanate, and oligomeric diphenylmethane diisocyanate. For the purposes of this preferred embodiment, component (a1) particularly preferably comprises oligomeric diphenylmethane diisocyanate and has a functionality of at least 2.4.

The viscosity of component (a1) used can vary widely. It is preferable that component (a1) has a viscosity of from 100 to 3000 mPa.s, particularly from 200 to 2500 mPa.s.

### Component (a2)

The invention uses, as component (a2), at least one polyfunctional OH-functionalized or NH-functionalized compound.

For the purposes of the process preferred in the invention, component (a2) is at least one polyfunctional aromatic amine.

Component (a2) can be to some extent produced in situ. In this type of embodiment, the reaction for the purposes of step (a) takes place in the presence of water (a3). Water reacts with the isocyanate groups to give amino groups with release of CO₂. Polyfunctional amines are therefore to some extent produced as intermediate product (in situ). During the course of the reaction, they are reacted with isocyanate groups to give urea linkages.

In this preferred embodiment, the reaction is carried out in the presence of water (a3) and of a polyfunctional aromatic amine as component (a2), and also optionally in the presence of a catalyst (a4).

In another embodiment, likewise preferred, the reaction of component (a1) and of a polyfunctional aromatic amine as component (a2) is optionally carried out in the presence of a catalyst (a4). No water (a3) is present here.

Polyfunctional aromatic amines are known per se to the person skilled in the art. Polyfunctional amines are amines which have, per molecule, at least two amino groups reactive toward isocyanates. Groups reactive toward isocyanates here are primary and secondary amino groups, and the reactivity of the primary amino groups here is generally markedly higher than that of the secondary amino groups.

The polyfunctional aromatic amines are preferably binuclear aromatic compounds having two primary amino groups (bifunctional aromatic amines), corresponding tri- or polynuclear aromatic compounds having more than two primary amino groups, or a mixture of the abovementioned compounds. Particularly preferred polyfunctional aromatic amines of component (a2) are isomers and derivatives of diaminodiphenylmethane.

The bifunctional binuclear aromatic amines mentioned are particularly preferably those of the general formula I, 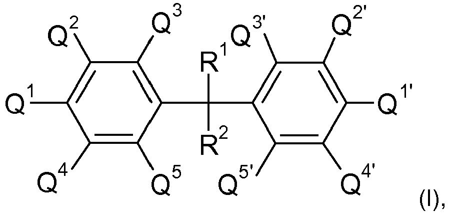 where R¹ and R² can be identical or different and are selected mutually independently from hydrogen and linear or branched alkyl groups having from 1 to 6 carbon atoms, and where all of the substituents Q¹ to Q⁵ and Q^{1'} to Q^{5'} are identical or different and are selected mutually independently from hydrogen, a primary amino group, and a linear or branched alkyl group having from 1 to 12 carbon atoms, where the alkyl group can bear further functional groups, with the proviso that the compound of the general formula I comprises at least two primary amino groups, where at least one of Q¹, Q³, and Q⁵ is a primary amino group, and at least one of Q^{1'}, Q^{3'}, and Q^{5'} is a primary amino group.

In one embodiment, the alkyl groups for the purposes of the substituents Q of the general formula I are selected from methyl, ethyl, n-propyl, isopropyl, n-butyl, sec-butyl, and tert-butyl. Compounds of this type are hereinafter termed substituted aromatic amines (a2-s). However, it is likewise preferable that all of the substituents Q are hydrogen, to the extent that they are not amino groups as defined above (the term used being unsubstituted polyfunctional aromatic amines).

It is preferable that R¹ and R² for the purposes of the general formula I are identical or different and are selected mutually independently from hydrogen, a primary amino group, and a linear or branched alkyl group having from 1 to 6 carbon atoms. It is preferable that R¹ and R² are selected from hydrogen and methyl. It is particularly preferable that R¹ = R² = H.

Other suitable polyfunctional aromatic amines (a2) are in particular isomers and derivatives of toluenediamine. Particularly preferred isomers and derivatives of toluenediamine for the purposes of component (a2) are toluene-2,4-diamine and/or toluene-2,6-diamine, and diethyltoluenediamines, in particular 3,5-diethyltoluene-2,4-diamine and/or 3,5-diethyltoluene-2,6-diamine.

It is very particularly preferable that component (a2) comprises at least one polyfunctional aromatic amine selected from 4,4'-diaminodiphenylmethane, 2,4'-diaminodiphenylmethane, 2,2'-diaminodiphenylmethane, and oligomeric diaminodiphenylmethane.

Oligomeric diaminodiphenylmethane comprises one or more polynuclear methylene-bridged condensates of aniline and formaldehyde. Oligomeric MDA comprises at least one, but generally a plurality of, oligomers of MDA having a functionality of more than 2, in particular 3 or 4, or 5. Oligomeric MDA is known or can be produced by methods known per se. Oligomeric MDA is usually used in the form of mixtures with monomeric MDA.

The (average) functionality of a polyfunctional amine of component (a2), where this amine comprises oligomeric MDA, can vary within the range from about 2.3 to about 5, in particular 2.3 to 3.5, and in particular from 2.3 to 3. One such mixture of MDA-based polyfunctional amines having varying functionalities is in particular crude MDA, which is produced in particular during the condensation of aniline with formaldehyde as intermediate product in production of crude MDI, usually catalyzed by hydrochloric acid.

It is particularly preferable that the at least one polyfunctional aromatic amine comprises diaminodiphenylmethane or a derivative of diaminodiphenylmethane. It is particularly preferable that the at least one polyfunctional aromatic amine comprises oligomeric diaminodiphenylmethane. It is particularly preferable that component (a2) comprises oligomeric diaminodiphenylmethane as compound (a2) and that its total functionality is at least 2.1. In particular, component (a2) comprises oligomeric diaminodiphenylmethane and its functionality is at least 2.4.

For the purposes of the present invention it is possible to control the reactivity of the primary amino groups by using substituted polyfunctional aromatic amines for the purposes of component (a2). The substituted polyfunctional aromatic amines mentioned, and stated below, hereinafter termed (a2-s), can be used alone or in a mixture with the abovementioned (unsubstituted) diaminodiphenylmethanes (where all Q in formula I are hydrogen, to the extent that they are not NH₂).

In this embodiment, Q², Q⁴, Q^{2'}, and Q^{4'} for the purposes of the formula I described above, inclusive of the attendant definitions, are preferably selected in such a way that the compound of the general formula I has at least one linear or branched alkyl group, where this can bear further functional groups, having from 1 to 12 carbon atoms in α-position with respect to at least one primary amino group bonded to the aromatic ring. It is preferable that Q², Q⁴, Q^{2'}, and Q^{4'} in this embodiment are selected in such a way that the substituted aromatic amine (a2-s) comprises at least two primary amino groups which respectively have one or two linear or branched alkyl groups having from 1 to 12 carbon atoms in α-position, where these can bear further functional groups. To the extent that one or more of Q², Q⁴, Q^{2'}, and Q^{4'} are selected in such a way that they are linear or branched alkyl groups having from 1 to 12 carbon atoms, where these bear further functional groups, preference is then given to amino groups and/or hydroxy groups, and/or halogen atoms, as these functional groups.

It is preferable that the amines (a2-s) are selected from the group consisting of 3,3',5,5'-tetraalkyl-4,4'-diaminodiphenylmethane, 3,3',5,5'-tetraalkyl-2,2'-diaminodiphenylmethane, and 3,3',5,5'-tetraalkyl-2,4'-diaminodiphenylmethane, where the alkyl groups in 3,3',5 and 5' position can be identical or different and are selected mutually independently from linear or branched alkyl groups having from 1 to 12 carbon atoms, where these can bear further functional groups. Preference is given to abovementioned alkyl groups methyl, ethyl, n-propyl, isopropyl, n-butyl, sec-butyl or tert-butyl (in each case unsubstituted).

In one embodiment, one of, a plurality of, or all of, the hydrogen atoms of one or more alkyl groups of the substituents Q can have been replaced by halogen atoms, in particular chlorine. As an alternative, one of, a plurality of, or all of, the hydrogen atoms of one or more alkyl groups of the substituents Q can have been replaced by NH₂ or OH. However, it is preferable that the alkyl groups for the purposes of the general formula I are composed of carbon and hydrogen.

In one particularly preferred embodiment, component (a2-s) comprises 3,3',5,5'-tetraalkyl-4,4'-diaminodiphenylmethane, where the alkyl groups can be identical or different and are selected independently from linear or branched alkyl groups having from 1 to 12 carbon atoms, where these optionally can bear functional groups. Abovementioned alkyl groups are preferably selected from unsubstituted alkyl groups, in particular methyl, ethyl, n-propyl, isopropyl, n-butyl, sec-butyl, and tert-butyl, particularly preferably from methyl and ethyl. Very particular preference is given to 3,3',5,5'-tetraethyl-4,4'-diaminodiphenylmethane, and/or 3,3',5,5'-tetramethyl-4,4'-diaminodiphenylmethane.

The abovementioned polyfunctional amines of component (a2) are known per se to the person skilled in the art or can be produced by known methods. One of the known methods is the reaction of aniline or, respectively, of derivatives of aniline with formaldehyde, with acidic catalysis.

As explained above, water, as component (a3), can to some extent replace the polyfunctional aromatic amine, in that it reacts with an amount, then calculated in advance, of additional polyfunctional aromatic isocyanate of component (a1) in situ to give a corresponding polyfunctional aromatic amine.

The term organic gel precursor (A) is used below for components (a1) to (a3).

### Catalyst (a4)

In one preferred embodiment, the process of the invention is preferably carried out in the presence of at least one catalyst as component (a4).

Catalysts that can be used are in principle any of the catalysts which are known to the person skilled in the art and which accelerate the trimerization of isocyanates (these being known as trimerization catalysts) and/or accelerate the reaction of isocyanates with amino groups (these being known as gel catalysts), and/or - to the extent that water is used - accelerate the reaction of isocyanates with water (these being known as blowing catalysts).

The corresponding catalysts are known per se, and perform in different ways in respect of the abovementioned three reactions. They can thus be allocated to one or more of the abovementioned types according to performance. The person skilled in the art is moreover aware that reactions other than the abovementioned reactions can also occur.

Corresponding catalysts can be characterized inter alia on the basis of their gel to blowing ratio, as is known by way of example from Polyurethane [Polyurethanes], 3rd edition, G. Oertel, Hanser Verlag, Munich, 1993, pp. 104 to 110.

To the extent that no component (a3), i.e. no water, is used, preferred catalysts have significant activity with regard to the trimerization process. This has an advantageous effect on the homogeneity of the network structure, resulting in particularly advantageous mechanical properties.

To the extent that water is used as component (a3), preferred catalysts (a4) have a balanced gel to blowing ratio, so that the reaction of component (a1) with water is not excessively accelerated, with an adverse effect on the network structure, and simultaneously a short gelling time is obtained, and therefore the demolding time is advantageously small. Preferred catalysts simultaneously have significant activity in respect of trimerization. This has an advantageous effect on the homogeneity of the network structure, giving particularly advantageous mechanical properties.

The catalysts can be a monomer unit (incorporable catalyst) or can be non-incorporable.

It is advantageous to use the smallest effective amount of component (a4). It is preferable to use amounts of from 0.01 to 5 parts by weight, in particular from 0.1 to 3 parts by weight, particularly preferably from 0.2 to 2.5 parts by weight, of component (a4), based on a total of 100 parts by weight of components (a1), (a2), and (a3).

Catalysts preferred for the purposes of component (a4) are selected from the group consisting of primary, secondary, and tertiary amines, triazine derivatives, organometallic compounds, metal chelates, quaternary ammonium salts, ammonium hydroxides, and also the hydroxides, alkoxides, and carboxylates of alkali metals and of alkaline earth metals.

Suitable catalysts are in particular strong bases, for example quaternary ammonium hydroxides, e.g. tetraalkylammonium hydroxides having from 1 to 4 carbon atoms in the alkyl moiety and benzyltrimethylammonium hydroxide, alkali metal hydroxides, e.g. potassium hydroxide or sodium hydroxide, and alkali metal alkoxides, e.g. sodium methoxide, potassium ethoxide and sodium ethoxide, and potassium isopropoxide.

Further suitable trimerization catalysts are, in particular, alkali metal salts of carboxylic acids, e.g. potassium formate, sodium acetate, potassium acetate, caesium acetate, ammonium acetate, potassium propionate, potassium sorbate, potassium 2-ethylhexanoate, potassium octanoate, potassium trifluoroacetate, potassium trichloroacetate, sodium chloroacetate, sodium dichloroacetate, sodium trichloroacetate, potassium adipate, potassium benzoate, sodium benzoate, alkali metal salts of saturated and unsaturated long-chain fatty acids having from 10 to 20 carbon atoms, and optionally lateral OH groups.

Other suitable catalysts are in particular N-hydroxyalkyl quaternary ammonium carboxylates, e.g. trimethylhydroxypropylammonium formate.

Examples of suitable organophosphorus compounds, in particular oxides of phospholenes, are 1-methylphospholene oxide, 3-methyl-1-phenylphospholene oxide, 1-phenylphospholene oxide, 3-methyl-1-benzylphospholene oxide.

Organometallic compounds are known per se to the person skilled in the art in particular as gel catalysts and are likewise suitable as catalysts (a4). Organotin compounds, such as tin 2-ethylhexanoate and dibutyltin dilaurate are preferred for the purposes of component (a4). Preference is further given to metal acetylacetonates, in particular zinc acetylacetonate.

Tertiary amines are known per se to the person skilled in the art as gel catalysts and as trimerization catalysts. Tertiary amines are particularly preferred as catalysts (a4). Preferred tertiary amines are in particular N,N-dimethylbenzylamine, N,N'-dimethylpiperazine, N,N-dimethylcyclohexylamine, N,N',N"-tris(dialkylaminoalkyl)-s-hexahydrotriazines, e.g. N,N',N"-tris(dimethylaminopropyl)-s-hexahydrotriazine, tris(dimethylaminomethyl)phenol, bis(2-dimethylaminoethyl) ether, N,N,N,N,N-pentamethyldiethylenetriamine, methylimidazole, dimethylimidazole, aminopropylimidazole, dimethylbenzylamine, 1,6-diazabicyclo[5.4.0]undec-7-ene, triethylamine, triethylenediamine (IUPAC: 1,4-diazabicyclo[2,2,2]octane), dimethylaminoethanolamine, dimethylaminopropylamine, N,N-dimethylaminoethoxyethanol, N,N,N-trimethylaminoethylethanolamine, triethanolamine, diethanolamine, triisopropanolamine, and diisopropanolamine, methyldiethanolamine, butyldiethanolamine, and hydroxyethylaniline.

Catalysts particularly preferred for the purposes of component (a4) are selected from the group consisting of N,N-dimethylcyclohexylamine, bis(2-dimethylaminoethyl) ether, N,N,N,N,N-pentamethyldiethylenetriamine, methylimidazole, dimethylimidazole, aminopropylimidazole, dimethylbenzylamine, 1,6-diazabicyclo[5.4.0]undec-7-ene, trisdimethylaminopropylhexahydrotriazine, triethylamine, tris(dimethylaminomethyl)phenol, triethylenediamine (diazabicyclo[2,2,2]octane), dimethylaminoethanolamine, dimethylaminopropylamine, N,N-dimethylaminoethoxyethanol, N,N,N-trimethylaminoethylethanolamine, triethanolamine, diethanolamine, triisopropanolamine, diisopropanolamine, methyldiethanolamine, butyldiethanolamine, hydroxyethylaniline, metal acetylacetonates, acetates, propionates, sorbates, ethylhexanoates, octanoates and benzoates.

The use of the catalysts (a4) preferred for the purposes of the present invention leads to porous materials with improved mechanical properties, in particular to improved compressive strength. Use of the catalysts (a4) moreover reduces the gelling time, i.e. accelerates the gelling reaction, without any adverse effect on other properties.

### Solvent

The organic aerogels or xerogels used in the invention are produced in the presence of a solvent.

For the purposes of the present invention, the term solvent comprises liquid diluents, i.e. not only solvents in the narrower sense but also dispersion media. The mixture can in particular be a genuine solution, a colloidal solution, or a dispersion, e.g. an emulsion or suspension. It is preferable that the mixture is a genuine solution. The solvent is a compound that is liquid under the conditions of the step (a), preferably an organic solvent.

Solvent used can in principle comprise an organic compound or a mixture of a plurality of compounds, where the solvent is liquid under the temperature conditions and pressure conditions under which the mixture is provided (abbreviated to: solution conditions). The constitution of the solvent is selected in such a way that the solvent is capable of dissolving or dispersing, preferably dissolving, the organic gel precursor. For the purposes of the preferred process described above for producing the organic aerogels or xerogels, preferred solvents are those which are a solvent for the organic gel precursor (A), i.e. those which dissolve the organic gel precursor (A) completely under reaction conditions.

The initial reaction product of the reaction in the presence of the solvent is a gel, i.e. a viscoelastic chemical network swollen by the solvent. A solvent which is a good swelling agent for the network formed generally leads to a network with fine pores and with small average pore diameter, whereas a solvent which is a poor swelling agent for the resultant gel generally leads to a coarse-pored network with large average pore diameter.

The selection of the solvent therefore affects the desired pore size distribution and the desired porosity. The selection of the solvent is generally also carried out in such a way as very substantially to avoid precipitation or flocculation due to formation of a precipitated reaction product during or after step (a) of the process of the invention.

When a suitable solvent is selected, the proportion of precipitated reaction product is usually smaller than 1 % by weight, based on the total weight of the mixture. The amount of precipitated product formed in a particular solvent can be determined gravimetrically, by filtering the reaction mixture through a suitable filter prior to the gel point.

Solvents that can be used are those known from the prior art to be solvents for isocyanatebased polymers. Preferred solvents here are those which are a solvent for components (a1), (a2), and, where relevant, (a3), i.e. those which substantially completely dissolve the constituents of components (a1), (a2), and, where relevant, (a3) under reaction conditions. It is preferable that the solvent is inert to component (a1), i.e. not reactive thereto.

Examples of solvents that can be used are ketones, aldehydes, alkyl alkanoates, amides, such as formamide and N-methylpyrrolidone, sulfoxides, such as dimethyl sulfoxide, aliphatic and cycloaliphatic halogenated hydrocarbons, halogenated aromatic compounds, and fluorinecontaining ethers. It is also possible to use mixtures made of two or more of the abovementioned compounds.

Acetals can also be used as solvents, in particular diethoxymethane, dimethoxymethane, and 1,3-dioxolane.

Dialkyl ethers and cyclic ethers are also suitable as solvent. Preferred dialkyl ethers are in particular those having from 2 to 6 carbon atoms, in particular methyl ethyl ether, diethyl ether, methyl propyl ether, methyl isopropyl ether, propyl ethyl ether, ethyl isopropyl ether, dipropyl ether, propyl isopropyl ether, diisopropyl ether, methyl butyl ether, methyl isobutyl ether, methyl tert-butyl ether, ethyl-n-butyl ether, ethyl isobutyl ether, and ethyl tert-butyl ether. Particularly preferred cyclic ethers are tetrahydrofuran, dioxane, and tetrahydropyran.

Other preferred solvents are alkyl alkanoates, in particular methyl formate, methyl acetate, ethyl formate, butyl acetate, and ethyl acetate. Preferred halogenated solvents are described in WO 00/24799, page 4, line 12 to page 5, line 4.

Aldehydes and/or ketones are preferred solvents. Aldehydes or ketones suitable as solvents are particularly those corresponding to the general formula R²-(CO)-R¹, where R¹ and R² are hydrogen or alkyl groups having 1, 2, 3 or 4 carbon atoms. Suitable aldehydes or ketones are in particular acetaldehyde, propionaldehyde, n-butyraldehyde, isobutyraldehyde, 2-ethylbutyraldehyde, valeraldehyde, isopentaldehyde, 2-methylpentaldehyde, 2-ethylhexaldehydes, acrolein, methacrolein, crotonaldehyde, furfural, acrolein dimer, methacrolein dimer, 1,2,3,6-tetrahydrobenzaldehyde, 6-methyl-3-cyclohexenaldehyde, cyanacetaldehyde, ethyl glyoxylate, benzaldehyde, acetone, diethyl ketone, methyl ethyl ketone, methyl isobutyl ketone, methyl n-butyl ketone, ethyl isopropyl ketone, 2-acetylfuran, 2-methoxy-4-methylpentan-2-one, cyclohexanone, and acetophenone. The abovementioned aldehydes and ketones can also be used in the form of mixtures. Particular preference is given, as solvents, to ketones and aldehydes having alkyl groups having up to 3 carbon atoms per substituent. Ketones of the general formula R¹(CO)R² are very particularly preferred, where R¹ and R² are mutually independently selected from alkyl groups having from 1 to 3 carbon atoms. In one first preferred embodiment, the ketone is acetone. In another preferred embodiment, at least one of the two substituents R¹ and/or R² comprises an alkyl group having at least 2 carbon atoms, in particular methyl ethyl ketone. Use of the abovementioned particularly preferred ketones in combination with the process of the invention gives porous materials with particularly small average pore diameter. Without any intention of restriction, it is believed that the pore structure of the resultant gel is particularly fine because of the relatively high affinity of the abovementioned particularly preferred ketones.

In many instances, particularly suitable solvents are obtained by using a mixture of two or more compounds which are selected from the abovementioned solvents and which are completely miscible with one another.

It is preferable that components (a1), (a2), and, where relevant, (a3) and, where relevant, (a4), and the solvent are provided in appropriate form prior to the reaction in step (a) of the process of the invention.

It is preferable that components (a1) on the one hand and (a2) and, where relevant, (a3) and, where relevant, (a4) on the other hand are provided separately, in each case in a suitable portion of the solvent. Separate provision permits ideal monitoring or control of the gelling reaction prior to and during the mixing process.

To the extent that water is used as component (a3), it is particularly preferable to provide component (a3) separately from component (a1). This avoids reaction of water with component (a1) with formation of networks in the absence of component (a2). Otherwise, the premixing of water with component (a1) leads to less advantageous properties in respect of the homogeneity of the pore structure and the thermal conductivity of the resultant materials.

The mixture(s) provided prior to conduct of step (a) can also comprise, as further constituents, conventional auxiliaries known to the person skilled in the art. Mention may be made by way of example of surfactant substances, nucleating agents, oxidation stabilizers, lubricants and demolding aids, dyes, and pigments, stabilizers, e.g. with respect to hydrolysis, light, heat, or discoloration, inorganic and/or organic fillers, reinforcing agents, and biocides.

Further details concerning the abovementioned auxiliaries and additives can be found in the technical literature, e.g. in Plastics Additives Handbook, 5th edition, H. Zweifel, ed. Hanser Publishers, Munich, 2001, pages 1 and 41-43.

In order to carry out the reaction in step (a) of the process, it is first necessary to produce a homogeneous mixture of the components provided prior to the reaction in step (a).

The components reacted for the purposes of step (a) can be provided in a conventional manner. It is preferable that a stirrer or other mixing apparatus is used for this purpose, in order to achieve good and rapid mixing. In order to avoid defects in the mixing process, the period necessary for producing the homogeneous mixture should be small in relation to the period within which the gelling reaction leads to the at least partial formation of a gel. The other mixing conditions are generally not critical, and by way of example the mixing process can be carried out at from 0 to 100°C and at from 0.1 to 10 bar (absolute), in particular by way of example at room temperature and atmospheric pressure. Once a homogeneous mixture has been produced, the mixing apparatus is preferably switched off.

The gelling reaction involves a polyaddition reaction, in particular a polyaddition reaction of isocyanate groups and amino or hydroxy groups.

For the purposes of the present invention, a gel is a crosslinked system based on a polymer in contact with a liquid (terms used being solvogel or lyogel, or if water is used as liquid: aquagel or hydrogel). The polymer phase here forms a continuous three-dimensional network.

For the purposes of step (a) of the process, the gel is usually produced via standing, i.e. simply by allowing the container, reaction vessel, or reactor containing the mixture (termed gelling apparatus below) to stand. It is preferable that during the gelling (gel formation) process the mixture undergoes no further stirring or mixing, because this could inhibit formation of the gel. It has proven advantageous to cover the mixture during the gelling process or to seal the gelling apparatus.

The gelling process is known per se to the person skilled in the art and is described by way of example at page 21, line 19 to page 23, line 13 in WO 2009/027310.

In principle, any solvent can be used as long as it is miscible with carbon dioxide or has a sufficient boiling point which allows for removal of the solvent from the resulting gel. Generally, the solvent will be a low molecular organic compound, i.e. an alcohol having 1 to 6 carbon atoms, preferably 2 to 4, although other liquids known in the art can be used. Possible solvents are, for example, ketones, aldehydes, alkyl alkanoates, amides such as formamide, N-methylpyrollidone, N-ethylpyrollidone, sulfoxides such as dimethyl sulfoxide, aliphatic and cycloaliphatic halogenated hydrocarbons, halogenated aromatic compounds and fluorinecontaining ethers. Mixtures of two or more of the abovementioned compounds are likewise possible. Examples of other useful liquids include but are not limited to: ethyl acetate, ethyl acetoacetate, acetone, dichloromethane, iso-propanol, methylethylketone, tetrahydrofurane, propylenecarbonate, and the like.

Further possibilities of solvents are acetals, in particular diethoxymethane, dimethoxymethane and 1,3-dioxolane.

Dialkyl ethers and cyclic ethers are likewise suitable as solvent. Preferred dialkyl ethers are, in particular, those having from 2 to 6 carbon atoms, in particular methyl ethyl ether, diethyl ether, methyl propyl ether, methyl isopropyl ether, propyl ethyl ether, ethyl isopropyl ether, dipropyl ether, propyl isopropyl ether, diisopropyl ether, methyl butyl ether, methyl isobutyl ether, methyl t-butyl ether, ethyl n-butyl ether, ethyl isobutyl ether and ethyl t-butyl ether. Preferred cyclic ethers are, in particular, tetrahydrofuran, dioxane and tetrahydropyran.

Aldehydes and/or ketones are particularly preferred as solvent. Aldehydes or ketones suitable as solvent are, in particular, those corresponding to the general formula R²-(CO)-R¹, where R¹ and R² are each hydrogen or an alkyl group having 1, 2, 3, 4, 5, 6 or 7 carbon atoms. Suitable aldehydes or ketones are, in particular, acetaldehyde, propionaldehyde, n-butyraldehyde, isobutyraldehyde, 2-ethylbutyraldehyde, valeraldehyde, isopentaldehyde, 2-methylpentaldehyde, 2-ethylhexaldehyde, acrolein, methacrolein, crotonaldehyde, furfural, acrolein dimer, methacrolein dimer, 1,2,3,6-tetrahydrobenzaldehyde, 6-methyl-3-cyclohexenaldehyde, cyanoacetaldehyde, ethyl glyoxylate, benzaldehyde, acetone, diethyl ketone, methyl ethyl ketone, methyl isobutyl ketone, methyl n-butyl ketone, methyl pentylketone, dipropyl ketone, ethyl isopropyl ketone, ethyl butyl ketone, diisobutylketone, 5-methyl-2-acetyl furan, 2-acetylfuran, 2-methoxy-4-methylpentan-2-one, 5-methylheptan-3-one, 2-heptanone, octanone, cyclohexanone, cyclopentanone, and acetophenone. The abovementioned aldehydes and ketones can also be used in the form of mixtures. Ketones and aldehydes having alkyl groups having up to 3 carbon atoms per substituent are preferred as solvent.

Further preferred solvents are alkyl alkanoates, in particular methyl formate, methyl acetate, ethyl formate, isopropyl acetate, butyl acetate, ethyl acetate, glycerine triacetate and ethyl acetoacetate. Preferred halogenated solvents are described in WO 00/24799, page 4, line 12 to page 5, line 4.

Further suitable solvents are organic carbonates such as for example dimethyl carbonate, diethyl carbonate, ethylene carbonate, propylene carbonate or butylene carbonate.

In many cases, particularly suitable solvents are obtained by using two or more completely miscible compounds selected from the abovementioned solvents.

The process of the present invention can also comprise further steps, for example suitable treatment steps.

The product obtained in the process of the present invention is a porous material with a porosity of preferably at least 70 vol.%, in particular an aerogel. The porous material may be a powder or a monolithic block. The porous material may be an organic porous material or an inorganic porous material. In the context of the present invention, the porous material may also be a xerogel.

In further embodiments, the porous material comprises average pore diameters from about 2 nm to about 2000 nm. In additional embodiments, the average pore diameters of dried gel materials may be about 4 nm, about 6 nm, about 8 nm, about 10 nm, about 12 nm, about 14 nm, about 16 nm, about 18 nm, about 20 nm, about 25 nm, about 30 nm, about 35 nm, about 40 nm, about 45 nm, about 50 nm, about 60 nm, about 70 nm, about 80 nm, about 90 nm, about 100 nm, about 200 nm, about 500 nm, about 1000 nm, or about 2000 nm. The size distribution of the pores of the porous material may be monomodal or multimodal according to the present invention.

In the context of the present invention, the surface area, the pore sizes as well as the pore volumes were measured by BET in accordance with ISO 9277:2010 unless otherwise noted. This International Standard specifies the determination of the overall specific external and internal surface area of disperse (e.g. nano-powders) or porous solids by measuring the amount of physically adsorbed gas according to the Brunauer, Emmett and Teller (BET) method. It takes account of the International Union for Pure and Applied Chemistry (IUPAC) recommendations of 1984 and 1994.

According to a further aspect, the present invention is also directed to a porous material, which is obtained or obtainable by the process according to the present invention.

The porous materials obtained or obtainable by the process of the present invention are suitable for different applications.

The present invention is also directed to the use of porous materials as disclosed above or a porous material obtained or obtainable according to a process as disclosed above as thermal insulation material or as core material for vacuum insulation panels.

The invention also relates to construction materials and vacuum insulation panels comprising the porous materials and the use of porous materials for thermal insulation. Preferably, the materials obtained according to the invention are used for thermal insulation especially in buildings, or for cold insulation, particularly in mobile, transportation applications or in stationary applications, for example in cooling devices or for mobile applications.

For mechanical reinforcement for certain applications fibers can be used as additives.

The materials used in thermal insulation materials are preferably used in the following fields of application: as insulation in hollow blocks, as core insulation for multi-shell building blocks, as core insulation for vacuum insulation panels (VIP), as the core insulation for exterior insulation systems, as insulation for cavity wall works, especially in the context of loose-fill insulation.

A further object of the present invention are molded articles, building blocks or modules, building systems and building composites which contain or consist of the porous material according to the present invention. Another object of the present invention are vacuum insulation panels which contain porous materials according to the present invention. Furthermore, the thermal insulation material and the porous materials are in particular suitable for the insulation of extruded hollow profiles, particularly as the core material for the insulation in window frames.

The thermal insulation material is for example an insulation material which is used for insulation in the interior or the exterior of a building or as wall cavity insulation. The porous material according to the present invention can advantageously be used in thermal insulation systems such as for example composite materials.

According to a further aspect, the present invention is also directed to the use of porous material, in particular an inorganic or organic porous material, as disclosed above or a porous material, in particular an inorganic porous material, obtained or obtainable by a process as disclosed above as catalyst support, for the preparation of sensors as additive for food applications or for medical, pharmaceutical and cosmetic applications. It can be preferable to use porous material based on biopolymers, more specifically polysaccharides, for some applications. Within cosmetic applications the porous material, in particular an inorganic or organic porous material, obtained or obtainable by the process of the present invention can be used for example as deodorant active agent which is one method for the treatment of human body odors. These can be provided in all forms which can be envisaged for a deodorant composition. It can be a lotion, dispersion as a spray or aerosol; a cream, in particular dispensed as a tube or as a grating; a fluid gel, dispensed as a roll-an or as a grating; in the form of a stick; in the form of a loose or compact powder, and comprising, in this respect, the ingredients generally used in products of this type which are well known to a person skilled in the art, with the proviso that they do not interfere with the aerogels in accordance with the invention.

The present invention is also directed to the use of porous materials as disclosed above or a porous material obtained or obtainable according to a process as disclosed above as thermal insulation material or for vacuum insulation panels. The thermal insulation material is for example insulation material which is used for insulation in the interior or the exterior of a building. The porous material according to the present invention can advantageously be used in thermal insulation systems such as for example composite materials.

According to a further embodiment, the present invention therefore is directed to the use of porous materials as disclosed above, wherein the porous material is used in interior or exterior thermal insulation systems.

Summarizing, the present invention includes the following embodiments, wherein these include the specific combinations of embodiments as indicated by the respective interdependencies defined therein.
Embodiment 1: Mold for manufacturing a body made of a porous material derived from precursors of the porous material in a sol-gel process carried out within the mold, comprising a lower part defining an interior volume for receiving the precursors of the porous material, wherein the interior volume defines the shape of the body to be manufactured, and at least a first opening through which the body is removable from the lower part, wherein surfaces of the lower part facing the interior volume are at least partially provided with a coating made of a material being electrically dissipative and non-sticky to a gel formed from the precursors of the porous material and/or the body.
Embodiment 2: Mold according to embodiment 1, wherein the lower part comprises the first opening.
Embodiment 3: Mold according to embodiment 1 or 2, wherein the lower part is made of metal or polymer.
Embodiment 4: Mold according to any one of embodiments 1 to 3, wherein the material of the coating comprises an electrical resistivity of not more than 10⁸ Ωm.
Embodiment 5: Mold according to any one of embodiments 1 to 4, wherein the interior volume defines a cuboid shape for the body.
Embodiment 6: Mold according to embodiment 5, wherein the shape has a length in a range of 10 cm to 100 cm and a width in a range of 10 cm to 100 cm.
Embodiment 7: Mold according to embodiment 5 or 6, wherein a height of the shape is variable.
Embodiment 8: Mold according to any one of embodiments 1 to 7, further comprising a cover part configured to close the first opening, a second opening, and a lid configured to close the second opening.
Embodiment 9: Mold according to embodiment 8, wherein the lower part or the cover part comprises the second opening.
Embodiment 10: Mold according to embodiment 8 or 9, wherein the first opening comprises a first opening area and the second opening comprises a second opening area, wherein the second opening area smaller than the first opening area.
Embodiment 11: Mold according to any one of embodiments 8 to 10, further comprising at least a first sealing configured to be arranged between the lower part and the cover part, wherein the first sealing is configured to provide a gas tight closing of the first opening by means of the cover part.
Embodiment 12: Mold according to any one of embodiments 1 to 11, wherein the lower part comprises a bottom and side walls extending from the bottom, wherein an upper rim of the side walls opposite to the bottom defines the first opening.
Embodiment 13: Mold according to any one of embodiments 1 to 12, wherein the surfaces comprise the lower part comprises the coating at portions intended for coming into contact with the precursors of the porous material.
Embodiment 14: Mold according to any one of embodiments 1 to 13, wherein the material of the coating is non-corroding.
Embodiment 15: Mold according to any one of embodiments 1 to 14, wherein the material of the coating comprises a shore hardness in a range of D60 to D80.
Embodiment 16: Mold according to any one of embodiments 1 to 15, wherein the coating comprises a thickness in a range of 20 µm to 70 µm.
Embodiment 17: Mold according to any one of embodiments 1 to 16, wherein the coating comprises at least one halogen containing polymer and at least one inorganic filler.
Embodiment 18: Mold according to embodiment 17, wherein the coating preferably comprises at least one inorganic filler and at least one polymer selected from the group consisting of polytetrafluoroethylene, perfluoro alkoxy polymers and fluorinated ethylene propylene polymers.
Embodiment 19: Mold according to any one of embodiments 1 to 18, wherein the coating is a reusable coating.
Embodiment 20: Mold according to embodiment 19, wherein the coating is reusable for at least 50 and preferably at least 100 cycles of the sol gel process.

### Short description of the figures

Further features and embodiments of the invention will be disclosed in more detail in the subsequent description, particularly in conjunction with the dependent claims. Therein the respective features may be realized in an isolated fashion as well as in any arbitrary feasible combination, as a skilled person will realize. The embodiments are schematically depicted in the figures. Therein, identical reference numbers in these figures refer to identical elements or functionally identical elements.

In the Figures:
Figure 1 shows a perspective view of a mold according to the present invention in an open state; and
Figure 2 shows a perspective view of the mold in a closed state.

### Detailed description

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "particularly", "more particularly", "specifically", "more specifically" or similar terms are used in conjunction with additional / alternative features, without restricting alternative possibilities. Thus, features introduced by these terms are additional / alternative features and are not intended to restrict the scope of the claims in any way. The invention may, as the skilled person will recognize, be performed by using alternative features. Similarly, features introduced by "in an embodiment of the invention" or similar expressions are intended to be additional / alternative features, without any restriction regarding alternative embodiments of the invention, without any restrictions regarding the scope of the invention and without any restriction regarding the possibility of combining the features introduced in such way with other additional / alternative or non-additional / alternative features of the invention.

The term "mold" as used herein refers to a hollowed-out block or container that is configured to be filled with a liquid or pliable material for a sol-gel process provided by precursors of a sol gel. Particularly, the sol-gel process is carried out within the mold. During the sol-gel process the precursors form a sol which subsequently starts to gel. Thus, the liquid hardens or sets inside the mold, adopting its shape defined by the interior volume thereof. The mold is basically used to carry out the sol-gel process. However, it is to be noted that the solvent may be removed from the thus formed gel with the gel remaining within the mold or with the gel removed from the mold. In the present invention, the mold may consist of more than one part, wherein the interior volume is defined by a lower part.

The term "sol-gel process" as used herein refers to a method for producing solid materials from small molecules. In the present case, the method is used for the fabrication of porous materials such as aerogels, xerogels and/or kryogels. The process involves conversion of monomers as precursors into a colloidal solution, the so-called sol, that subsequently reacts to an integrated network, the so-called gel, of either discrete particles or network polymers. In this chemical procedure, the sol gradually evolves towards the formation of a gel-like diphasic system containing both a liquid phase and solid phase whose morphologies range from discrete particles to continuous polymer networks. This gel-like diphasic system is called gel. Particularly, the gel encapsulates or surrounds the solvent within pores which are connected to one another, i.e. the pores form an interpenetrating network. Removal of the remaining liquid phase, i.e. the solvent, requires a drying process, which is typically accompanied by a certain amount of shrinkage and densification. The rate at which the solvent can be removed is ultimately determined by the distribution of porosity in the gel. The ultimate microstructure of the final component will clearly be strongly influenced by changes imposed upon the structural template during this phase of processing.

The term "body" as used herein refers to a solid object formed by an identifiable collection of matter, which may be constrained by an identifiable boundary, and may move or may be moved as a unit by translation or rotation, in 3-dimensional space.

The term "porous" as used herein refers to material characteristics of having pores. As the solvent may be removed from the gel either with the gel being or remaining within the mold or after the gel is removed from the mold, the term "porous" covers both pores being filled with a liquid, particularly, the solvent, or a gas such as air. The pores may be connected to one another so as to form a type of network.

The term "coating" as used herein refers a covering that is applied to the inner surfaces of the lower part of the mold. Particularly, the coating may be applied at least to those areas of the lower part intended to come into contact with the precursors of the porous material and the body made thereof. Needless to say, the coating may be applied to the total inner surfaces of the lower part defining the interior volume.

The term "electrically dissipative" as used herein refers to material characteristics, wherein electric charges are allow to flow to ground but more slowly in a more controlled manner if compared to electrically conductive materials.

The term "non-sticky" as uses herein refers to characteristics wherein one part does not adhere to another part. Thus, both parts are in loose contact to one another. According to the present invention, the coating does not stick to the gel formed or resulting from the precursors filled into the mold. In case the solvent used with the sol gel process is removed with the gel being within the mold, the coating is configured not to stick to the thus formed body in order to allow the body being removed from the mold.

The terms "width" and "length" of the shape of the body as used herein refer to dimensions perpendicular to a height or thickness of the shape of the body.

The term "opening area" as used herein refers to the area of an opening defined by the boundary of the opening.

The term "sealing" as used herein refers to a device that helps join two parts together by preventing leakage, containing pressure, or excluding contamination.

The term "gas-tight" as used herein refers to characteristics of a material to be impermeable to gases. Needless to say, the impermeability is not feasible to a complete or absolute extension but the impermeability is to be understood in the sense of an extension as far as technically feasible.

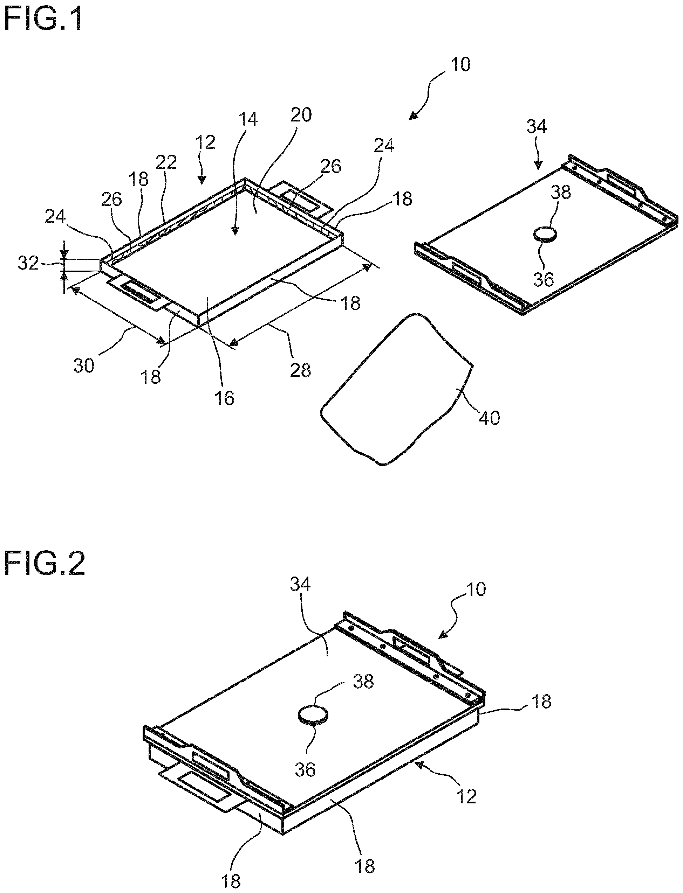

Figure 1 shows a perspective view of a mold 10 for manufacturing a body made of a porous material derived from precursors of the porous material in a sol-gel process carried out within the mold 10 according to the present invention. The mold 10 is shown in an open state. The mold 10 comprises a lower part 12. The lower part 12 is made of metal. The lower part 12 defines an interior volume 14 for receiving the precursors of the porous material. The interior volume 14 defines the shape of the body to be manufactured. Particularly, the lower part 12 comprises a bottom 16 and side walls 18 extending from the bottom 16. The interior volume 14 is defined by the bottom 16 and the side walls 18. The mold 10 further comprises at least a first opening 20 through which the body is removable from the lower part 12. In the present example, the lower part 12 comprises the first opening 20. Particularly, an upper rim 22 of the side walls 18 opposite to the bottom 16 defines the first opening 20.

Surfaces 24 of the lower part 12 facing the interior volume 14 are at least partially provided with a coating 26 made of a material being electrically dissipative and non-sticky to a gel formed from the precursors of the porous material and/or the body. More particularly, the surfaces 24 of the lower part 12 comprise the coating 26 at least at areas intended for coming into contact with the gel formed from the precursors of the porous material. With other words, the coating 26 does not need to cover the complete surfaces 24 of the lower part which face the interior volume 14 but may only cover those portions or areas which are intended to come into contact with the precursors of the porous material. The material of the coating 26 comprises an electrical resistivity of not more than 10⁸ Ωm such as 10⁶ Ωm. The material of the coating 26 is non-corroding. The material of the coating 26 comprises a shore hardness in a range of D60 to D80 such as D70. The coating 26 comprises a thickness in a range of 20 µm to 70 µm such as 50 µm. The coating 26 is a reusable coating. Particularly, the coating 26 is reusable for at least 50 and preferably at least 100 cycles of the sol gel process. The coating preferably comprises at least one halogen-containing polymer and at least one inorganic filler. More preferably, the halogen-containing polymer is a fluorinated polymer such as for example polytetrafluoroethylene, a perfluoro alkoxy polymer or a fluorinated ethylene propylene polymer. The coating preferably comprises at least one inorganic filler and at least one polymer selected from the group consisting of polytetrafluoroethylene, perfluoro alkoxy polymers and fluorinated ethylene propylene polymers. Particularly preferred are fluorinated ethylene propylene polymers such as perfluoro ethylene propylene. In the present embodiment, the coating 26 is made of a fluorinated polymer with conductive additive and anti-scratch additive. Such a material is commercially available under the name Rhenolease MK IIIG clear SiC/leitf. (hereinafter called Rhenolease) from the company Rhenotherm Kunststoffbeschichtungs GmbH, 47906 Kempen, Germany.

Basically, the interior volume 14 may define any shape for the body such as round, oval, elliptical, polygonal, polygonal with rounded edges. In the present example, the interior volume 14 defines a cuboid shape for the body. The shape has a length 28 in a range of 10 cm to 100 cm such as 60 cm and a width 30 in a range of 10 cm to 100 cm such as 40 cm. A height 32 of the shape is variable and may be adjusted by means of the filling level of the precursors within the lower part 12.

The mold 10 further comprises a cover part 34 configured to close the first opening 20, a second opening 36, and a lid 38 configured to close the second opening 36. In the present example, the cover part 34 comprises the second opening 36. The first opening 20 comprises a first opening area and the second opening 36 comprises a second opening area. The second opening area is smaller than the first opening area. The mold 10 further comprises at least a first sealing 40 configured to be arranged between the lower part 12 and the cover part 34.The first sealing 40 is configured to provide a gas tight closing of the first opening 20 by means of the cover part 34. Optionally, the mold 10 may further comprises a second sealing (not shown in detail) configured to be arranged between the lid 38 and the cover part 34 and configured to provide a gas tight closing of the second opening 36 by means of the lid 38.

Figure 2 shows a perspective view of the mold 10 in a closed state. Particularly, the cover part 34 is arranged on the lower part 12 such that the first opening 20 is closed. The cover part 34 is removably mounted to the lower part 12. For example, the cover part 34 may be connected to the lower part 12 by means of a snap-fit connection, screws, hooks or the like. Further, the lid 38 closes the second opening 36.

The mold 10 may be used as follows. The cover part 34 is disposed onto the lower part 12 with the first opening 20 being closed. The precursors of the porous material, which are solved in a solvent, are filled into the lower part 12 up to a predetermined amount through the second opening 36. Subsequently, the second opening 36 is closed by the lid 38. Thereby, any solvent vapor is prevented from leaking or releasing from the mold 10. Then, the sol-gel reaction takes place wherein the precursors first form a sol with the solvent and subsequently form a gel. After gelling, the gel is hardened for a predetermined time such as at least 2 hours and preferably at least 8 hours. The hardening causes a kind of ageing of the gel which is necessary for the sol-gel reaction to proceed far enough such that the gel can be removed from the mold. If the sol-gel reaction was not to proceed far enough, the gel might not be sufficiently mechanically stable for handling, particularly for drying, or unreacted material could leak out of the gel during drying or could cause other problems such as negative impact on performance, e.g. fire behavior, unwanted emissions. After hardening, the cover part 34 is removed from the lower part 12. Thereby, the first opening 20 is exposed again. Then, the solvent is removed from the gel. The solvent may be removed by drying the gel in an oven or the like. It is to be noted that the solvent may be removed while the gel is in the lower part 12 or the gel may be removed from the lower part 12 before the gel is dried. After the solvent is removed from the gel, the body is formed. If the gel has been dried within the lower part 12, the body may subsequently be removed from the mold 10 and lower part 12, respectively. Due to the specific coating 26, neither the gel formed from the precursors within the lower part 12 nor the body sticks to the mold 10. If it is intended to remove the solvent with the gel being removed from the lower part 12 of the mold 10, the material of the coating may be selected such that it merely does not stick to the formed gel.

The mold 10 may be modified as follows. The lower part 12 may be made of a polymer. The coating 26 may completely cover the surfaces 24 facing the interior volume 14 or may even cover the complete lower part 12. The mold 12 may be used without the cover part 34 if an excessive release of any solvent vapor is otherwise prevented. The second opening 36 may be provided at the lower part 12. The shape of the body may be any shape such as square, rounded or the like. The mold 10 may comprise more parts than the lower part 12 and the cover part 34 such as an intermediate part arrangeable between the lower part 12 and the cover part 34.

### Examples

The mold 10 and more particularly the material of the coating 26 are specified in further detail as follows.

The following components were prepared:
Component 1: To methylethylketone were added 3-4% MDEA, 1,5-2,5% potassium sorbate solution (20% in monoethylene glycol), 1,8-3,5% n-butanol.
Component 2: To methylethylketone were added 15-20% polymeric MDI.

Components 1 and 2 were combined at room temperature and directly poured into a mold to form a gel slab. The mold was covered to prevent evaporation of the solvent from the gel. After 1h, the cover was removed and the mold was inverted on a flat surface to demold the gel slab.

Table 1 gives a brief summary of the analyzed molds and coatings as well as the results of the analyzed examples. The bodies have been produced from the components described above.

In the first column from the left, the respective materials of the lower part 12 and the coating 26, respectively, are given. In the second column from the left, the respective dimensions of the analyzed molds are given. In the third column from the left, other comments on the molds and coatings, respectively, are given. In the fourth column from the left, the number the bodies were removable from the lower part 12 due to the coating 26 is given. In the fifth column from the left, it is given whether the respective materials of the lower part 12 and the coating 26 are robust to scratching or not. In the sixth column from the left, it is given whether the respective materials of the lower part 12 and the coating 26 are electrically dissipative or not. In the seventh column from the left, remarks on the demolding characteristics are given. As can be taken from the last line of Table 1, using a fluorinated polymer with conductive additive and anti-scratch additive as is present with Rhenolease provides significant advantages as the number of removals is significantly higher than with the other materials, it is robust to scratching and electrically dissipative.

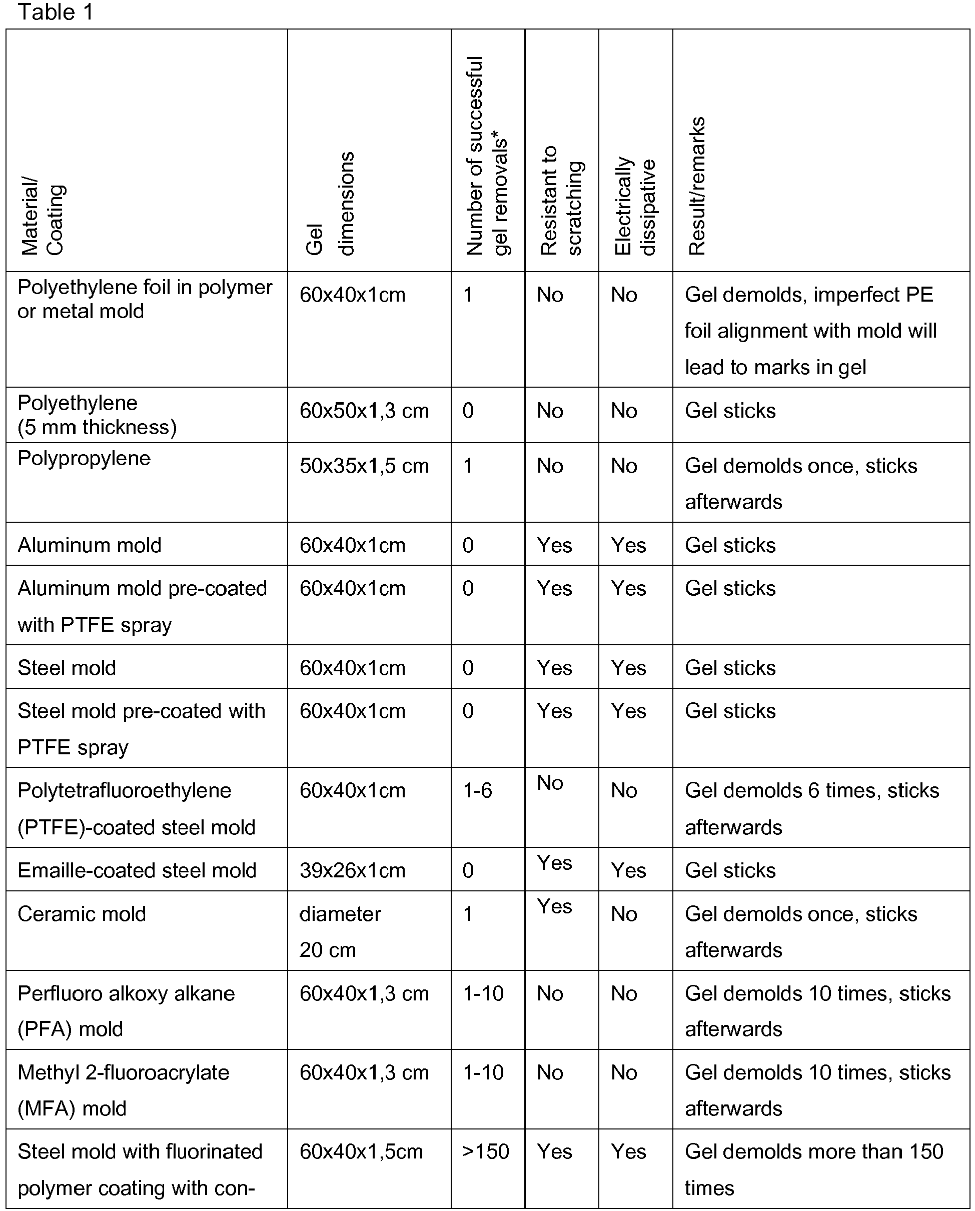

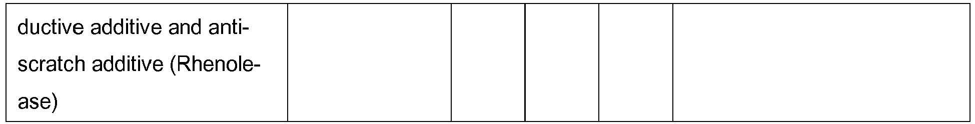

### Cited Literature

- WO 00/24799

## Claims

1. Mold (10) for manufacturing a body made of a porous material derived from precursors of the porous material in a sol-gel process carried out within the mold (10), comprising a lower part (12) defining an interior volume (14) for receiving the precursors of the porous material, wherein the interior volume (14) defines the shape of the body to be manufactured, and
at least a first opening (20) through which the body is removable from the lower part (12), wherein surfaces (24) of the lower part (12) facing the interior volume (14) are at least partially provided with a coating (26) made of a material being electrically dissipative and non-sticky to a gel formed from the precursors of the porous material and/or the body,
**characterized in that**
the material of the coating (26) comprises an electrical resistivity of not more than 10⁸ Ωm.

2. Mold (10) according to claim 1, wherein the lower part (12) comprises the first opening (20).

3. Mold (10) according to claim 1 or 2, wherein the lower part (12) is made of metal or polymer.

4. Mold (10) according to any one of claims 1 to 3, wherein the interior volume (14) defines a cuboid shape for the body.

5. Mold (10) according to claim 4, wherein the shape has a length in a range of 10 cm to 100 cm and a width in a range of 10 cm to 100 cm and/or a height of the shape is variable.

6. Mold (10) according to any one of claims 1 to 5, further comprising a cover part (34) configured to close the first opening (20), a second opening (36), and a lid (38) configured to close the second opening (36).

7. Mold (10) according to claim 6, wherein the lower part (12) or the cover part (34) comprises the second opening (36).

8. Mold (10) according to claim 6 or 7, wherein the first opening (20) comprises a first opening area and the second opening (36) comprises a second opening area, wherein the second opening area smaller than the first opening area.

9. Mold (10) according to any one of claims 6 to 8, further comprising at least a first sealing (40) configured to be arranged between the lower part (12) and the cover part (34), wherein the first sealing (40) is configured to provide a gas tight closing of the first opening (20) by means of the cover part (34).

10. Mold (10) according to any one of claims 1 to 9, wherein the lower part (12) comprises a bottom (16) and side walls (18) extending from the bottom (16), wherein an upper rim (22) of the side walls (18) opposite to the bottom (16) defines the first opening (20).

11. Mold (10) according to any one of claims 1 to 10, wherein the surfaces (24) of the lower part (12) comprises the coating (26) at portions intended for coming into contact with the gel formed from the precursors of the porous material.

12. Mold (10) according to any one of claims 1 to 11, wherein the material of the coating (26) is non-corroding.

13. Mold (10) according to any one of claims 1 to 12, wherein the coating (26) comprises at least one halogen-containing polymer and at least one inorganic filler, particularly wherein the coating (26) preferably comprises at least one inorganic filler and at least one polymer selected from the group consisting of polytetrafluoroethylene, perfluoro alkoxy polymers and fluorinated ethylene propylene polymers.

14. Mold (10) according to any one of claims 1 to 13, wherein the coating (26) is a reusable coating (26), particularly wherein the coating (26) is reusable for at least 50 and preferably at least 100 cycles of the sol gel process.

## Patentansprüche

1. Formwerkzeug (10) zur Herstellung eines Körpers aus einem porösen Material, das sich von Vorstufen des porösen Materials ableitet, in einem in dem Formwerkzeug (10) durchgeführten Sol-Gel-Verfahren, umfassend einen unteren Teil (12), der ein inneres Volumen (14) zur Aufnahme der Vorstufen des porösen Materials definiert, wobei das innere Volumen (14) die Form des herzustellenden Körpers definiert, und mindestens eine erste Öffnung (20), durch die der Körper aus dem unteren Teil (12) entfernt werden kann, wobei Oberflächen (24) des unteren Teils (12), die dem inneren Volumen (14) zugewandt sind, zumindest teilweise mit einer Beschichtung (26) aus einem Material, das elektrisch dissipativ und gegenüber einem aus den Vorstufen des porösen Materials gebildeten Gel und/oder dem Körper nichthaftend ist, versehen sind, **dadurch gekennzeichnet, dass** das Material der Beschichtung (26) einen spezifischen elektrischen Widerstand von nicht mehr als 10⁸ Ωm aufweist.

2. Formwerkzeug (10) nach Anspruch 1, wobei der untere Teil (12) die erste Öffnung (20) umfasst.

3. Formwerkzeug (10) nach Anspruch 1 oder 2, wobei der untere Teil (12) aus Metall oder Polymer besteht.

4. Formwerkzeug (10) nach einem der Ansprüche 1 bis 3, wobei das innere Volumen (14) eine quaderförmige Form für den Körper definiert.

5. Formwerkzeug (10) nach Anspruch 4, wobei die Form eine Länge in einem Bereich von 10 cm bis 100 cm und eine Breite in einem Bereich von 10 cm bis 100 cm aufweist und/oder eine Höhe der Form variabel ist.

6. Formwerkzeug (10) nach einem der Ansprüche 1 bis 5, ferner umfassend einen Abdeckteil (34), der zum Schließen der ersten Öffnung (20) ausgestaltet ist, eine zweite Öffnung (36) und einen Deckel (38), der zum Schließen der zweiten Öffnung (36) ausgestaltet ist.

7. Formwerkzeug (10) nach Anspruch 6, wobei der untere Teil (12) oder der Abdeckteil (34) die zweite Öffnung (36) umfasst.

8. Formwerkzeug (10) nach Anspruch 6 oder 7, wobei die erste Öffnung (20) einen ersten Öffnungsbereich umfasst und die zweite Öffnung (36) einen zweiten Öffnungsbereich umfasst, wobei der zweite Öffnungsbereich kleiner ist als der erste Öffnungsbereich.

9. Formwerkzeug (10) nach einem der Ansprüche 6 bis 8, ferner umfassend mindestens eine erste Abdichtung (40), die zum Anordnen zwischen dem unteren Teil (12) und dem Abdeckteil (34) ausgestaltet ist, wobei die erste Abdichtung (40) zum Bereitstellen eines gasdichten Verschlusses der ersten Öffnung (20) mit Hilfe des Abdeckteils (34) ausgestaltet ist.

10. Formwerkzeug (10) nach einem der Ansprüche 1 bis 9, wobei der untere Teil (12) einen Boden (16) und sich von dem Boden (16) erstreckende Seitenwände (18) umfasst, wobei ein oberer Rand (22) der Seitenwände (18), der dem Boden (16) gegenüberliegt, die erste Öffnung (20) definiert.

11. Formwerkzeug (10) nach einem der Ansprüche 1 bis 10, wobei die Oberflächen (24) des unteren Teils (12) die Beschichtung (26) in Teilen, die für das Inkontaktkommen mit dem aus den Vorstufen des porösen Materials gebildeten Gel vorgesehen sind, umfassen.

12. Formwerkzeug (10) nach einem der Ansprüche 1 bis 11, wobei das Material der Beschichtung (26) nichtkorrodierend ist.

13. Formwerkzeug (10) nach einem der Ansprüche 1 bis 12, wobei die Beschichtung (26) mindestens ein halogenhaltiges Polymer und mindestens einen anorganischen Füllstoff umfasst, insbesondere wobei die Beschichtung (26) vorzugsweise mindestens einen anorganischen Füllstoff und mindestens ein Polymer aus der Gruppe bestehend aus Polytetrafluorethylen, Perfluoralkoxypolymeren und fluorierten Ethylen-Propylen-Polymeren umfasst.

14. Formwerkzeug (10) nach einem der Ansprüche 1 bis 13, wobei es sich bei der Beschichtung (26) um eine wiederverwendbare Beschichtung (26) handelt, insbesondere wobei die Beschichtung (26) für mindestens 50 und vorzugsweise mindestens 100 Zyklen des Sol-Gel-Verfahrens wiederverwendbar ist.

## Revendications

1. Moule (10) pour la fabrication d'un corps composé d'un matériau poreux issu de précurseurs du matériau poreux dans un procédé sol-gel mis en œuvre à l'intérieur du moule (10), comprenant une partie inférieure (12) définissant un volume intérieur (14) pour la réception des précurseurs du matériau poreux, le volume intérieur (14) définissant la forme du corps devant être fabriqué, et
au moins une première ouverture (20) par laquelle le corps est retirable de la partie inférieure (12), des surfaces (24) de la partie inférieure (12) faisant face au volume intérieur (14) étant au moins partiellement pourvues d'un revêtement (26) composé d'un matériau qui est électriquement dissipatif et non collant à un gel formé à partir de précurseurs du matériau poreux et/ou au corps,
**caractérisé en ce que** le matériau du revêtement (26) comprend une résistivité électrique non supérieure à 10⁸ Ωm.

2. Moule (10) selon la revendication 1, la partie inférieure (12) comprenant la première ouverture (20).

3. Moule (10) selon la revendication 1 ou 2, la partie inférieure (12) étant composée de métal ou de polymère.

4. Moule (10) selon l'une quelconque des revendications 1 à 3, le volume intérieur (14) définissant une forme cuboïde pour le corps.

5. Moule (10) selon la revendication 4, la forme possédant une longueur dans une plage de 10 cm à 100 cm et une largeur dans une plage de 10 cm à 100 cm et/ou une hauteur de la forme étant variable.

6. Moule (10) selon l'une quelconque des revendications 1 à 5, comprenant en outre une partie de couverture (34) configurée pour fermer la première ouverture (20), une deuxième ouverture (36), et un couvercle (38) configuré pour fermer la deuxième ouverture (36).

7. Moule (10) selon la revendication 6, la partie inférieure (12) ou la partie de couverture (34) comprenant la deuxième ouverture (36).

8. Moule (10) selon la revendication 6 ou 7, la première ouverture (20) comprenant une première zone d'ouverture et la deuxième ouverture (36) comprenant une deuxième zone d'ouverture, la deuxième zone d'ouverture étant plus petite que la première zone d'ouverture.

9. Moule (10) selon l'une quelconque des revendications 6 à 8, comprenant en outre au moins un premier scellement (40) configuré pour être agencé entre la partie inférieure (12) et la partie de couverture (34), le premier scellement (40) étant configuré pour fournir une fermeture étanche aux gaz de la première ouverture (20) au moyen de la partie de couverture (34).

10. Moule (10) selon l'une quelconque des revendications 1 à 9, la partie inférieure (12) comprenant un fond (16) et des parois latérales (18) s'étendant du fond (16), un rebord supérieur (22) des parois latérales (18) opposé au fond (16) définissant la première ouverture (20).

11. Moule (10) selon l'une quelconque des revendications 1 à 10, les surfaces (24) de la partie inférieure (12) comprenant le revêtement (26) au niveau de parties destinées à entrer en contact avec le gel formé à partir des précurseurs du matériau poreux.

12. Moule (10) selon l'une quelconque des revendications 1 à 11, le matériau du revêtement (26) étant non corrosif.

13. Moule (10) selon l'une quelconque des revendications 1 à 12, le revêtement (26) comprenant au moins un polymère contenant un halogène et au moins une charge inorganique, particulièrement, le revêtement (26) comprenant préférablement au moins une charge inorganique et au moins un polymère choisi dans le groupe constitué par un polytétrafluoroéthylène, des polymères perfluoro alcoxy et des polymères fluorés d'éthylène propylène.

14. Moule (10) selon l'une quelconque des revendications 1 à 13, le revêtement (26) étant un revêtement (26) réutilisable, particulièrement le revêtement (26) étant réutilisable pour au moins 50 et préférablement au moins 100 cycles du procédé sol-gel.
